# EUROPEAN PATENT APPLICATION

(11) **EP 4 672 593 A1**
(43) Date of publication of application: **31.12.2025**
(21) Application number: 24184846.4
(22) Date of filing: 27.06.2024
(51) Int. Cl.: H02P 29/02, B25F 5/00, H02P 29/024, H02P 29/032

(54) **METHODS, POWER TOOLS AND COMPUTER PROGRAM PRODUCTS FOR DYNAMIC CURRENT CONTROL**

(71) Applicant: Greenworks (Jiangsu) Co., Ltd., Changzhou, Jiangsu 213023 (CN)
(72) Inventor: HEATH, Michael Graham, 565 32 Mullsjö (SE); MÅRTENSSON, Anton, 561 36 Huskvarna (SE); LA, Stefan, 556 10 Jönköping (SE); JOHANSSON, Peter, 562 40 Taberg (SE)
(74) Representative: Zacco Sweden AB

(57) **Abstract**

The present disclosure relates to a method (100) for dynamic current control in a hand-held power tool, the method comprising repeatedly obtaining (S110), from a set of temperature sensors, a measured respective temperature of a motor and/or a power source and/or a control circuitry of the hand-held power tool and when the respective measured temperature exceeds a respective predetermined temperature threshold of the motor and/or the power source and/or the control circuitry, executing (S120) a maximum current limit reduction sequence, the maximum current limit reduction sequence being configured to reduce the current limit by a predetermined amount per a predetermined unit temperature over the respective predetermined temperature threshold, until the respective temperature of the motor and/or the power source and/or the control circuitry is below the respective predetermined temperature threshold.

## Description

### TECHNICAL FIELD

The present disclosure relates to dynamic current control of hand-held power tools.

### BACKGROUND ART

During operational use of hand-held power tools, continuous and efficient operation is of utmost importance. In practice, overheating often causes interruptions in operational use, requiring waiting periods while waiting for the power tool to cool down. There is thus a need in the art for addressing said issues.

### SUMMARY OF THE INVENTION

The present disclosure relates to a method for dynamic current control in a hand-held power tool. The hand-held power tool comprises a motor, a power source, control circuitry and a set of temperature sensors configured to measure respective temperatures of the motor and/or the power source and/or the control circuitry. The control circuitry is arranged to control supply of a current from the power source to the motor. The amount of current supplied by the power source is configured to not exceed a current limit determined by the control circuitry. The current limit is configured to not exceed a maximum current limit. The method comprises repeatedly executing a current control sequence. The current control sequence comprises obtaining, from the set of temperature sensors, a measured respective temperature of the motor and/or the power source and/or the control circuitry. The current control sequence further comprises, when the respective measured temperature exceeds a respective predetermined temperature threshold of the motor and/or the power source and/or the control circuitry, executing a maximum current limit reduction sequence. The maximum current limit reduction sequence is configured to reduce the current limit by a predetermined amount per a predetermined unit temperature over the respective predetermined temperature threshold, until the respective temperature of the motor and/or the power source and/or the control circuitry is below the respective predetermined temperature threshold.

The meaning of the term "dynamic current control", as used herein, is simply the automated process of controlling the current limit in a hand-held power tool based on temperature feedback.

A technical effect and advantage of the disclosed method is that it eliminates the need for overtemperature cut-out. For hand-held power tools such as chain saws, on-load cutting revolutions per minute, RPM, can be maintained for a longer time.

An additional technical effect and advantage is that flexibility to current limits are provided while simultaneously guaranteeing overcurrent protection.

When the motor is running fast, the airflow through the motor has a rapid cooling effect. In contrast, when the motor slows down because of a high load, the cooling is less, so it is better to keep the motor running as fast as possible during on-load activity. The disclosed method enables maximizing this cooling effect.

By monitoring temperatures of the power source, such as a battery, control circuitry, such as metal oxide semiconductor field effect transistors, MOSFETs, and the motor, a wide range of overtemperature shut down scenarios can be avoided, and component lifetimes can be extended.

According to some aspects, the predetermined amount per predetermined unit temperature of the maximum current limit reduction sequence is five amperes, A, per degree Celsius, °C. Five amperes per degree Celsius strikes a balance between how much the current shall be reduced in order to get the temperature to cool down, while simultaneously providing as much power to the motor as possible in order to maintain optimal performance of the motor.

According to some aspects, the current control sequence further comprises based on the measured temperature not exceeding any of said respective predetermined temperature thresholds and the current limit being below the maximum current limit, increasing the current limit by a predetermined amount. The increased current limit is configured to not exceed the maximum current limit.

By increasing power when needed, the cooling from airflow through the motor is maximized. A further technical effect is enabling more power to be delivered to the motor when it is cool, and to intelligently limit the power available for the tool when it is hot.

According to some aspects, the respective predetermined temperature threshold for the motor, control circuitry and power source are one-hundred and thirty degrees Celsius, one-hundred degrees Celsius and eighty degrees Celsius, respectively.

The temperature thresholds optimize performance of typical motors, batteries and electronic components such as MOSFETs by keeping their respective work temperatures in optimal temperature ranges.

The present disclosure further relates to a computer program product for dynamic current control comprising a non-transitory computer-readable storage medium having thereon a computer program comprising program instructions, the computer program being loadable into a processor and configured to cause the processor to perform the method for dynamic current control according to any of the preceding claims.

According to some aspects, the processor comprises an electronic microcontroller capable of executing a user created program.

The computer program product implements the method for dynamic current control and has all the associated technical effects and advantages.

The present disclosure also relates to a hand-held power tool for dynamic current control. The hand-held power tool comprises a motor, a power source, control circuitry, and a set of temperature sensors configured to measure respective temperatures of the motor and/or the power source and/or the control circuitry. The control circuitry is arranged to control supply of a current from the power source to the motor. The amount of current supplied by the power source is configured to not exceed a current limit determined by the control circuitry. The current limit is configured to not exceed a maximum current limit. The control circuitry is configured to carry out the method for dynamic current control as described above and below.

The hand-held power tool implements the method for dynamic current control and has all the associated technical effects and advantages.

According to some aspects, the circuitry comprises a processor and a memory, wherein the memory has stored there in a computer program product for dynamic current control according as described above and below.

According to some aspects, the processor comprises an electronic microcontroller capable of executing a user created program.

### BRIEF DESCRIPTION OF THE DRAWINGS

Figure 1a illustrates the basic idea of the disclosed method for dynamic current control;
Figure 1b illustrates aspects of the disclosed method for dynamic current control;
Figure 1c illustrates technical effects of the disclosed method for dynamic current control;
Figure 1d illustrates a flowchart of aspects of the disclosed method for dynamic current control;
Figures 1e illustrates technical effects of the disclosed method for dynamic current control; and
Figure 2 illustrates a hand-held power tool for dynamic current control.

### DETAILED DESCRIPTION

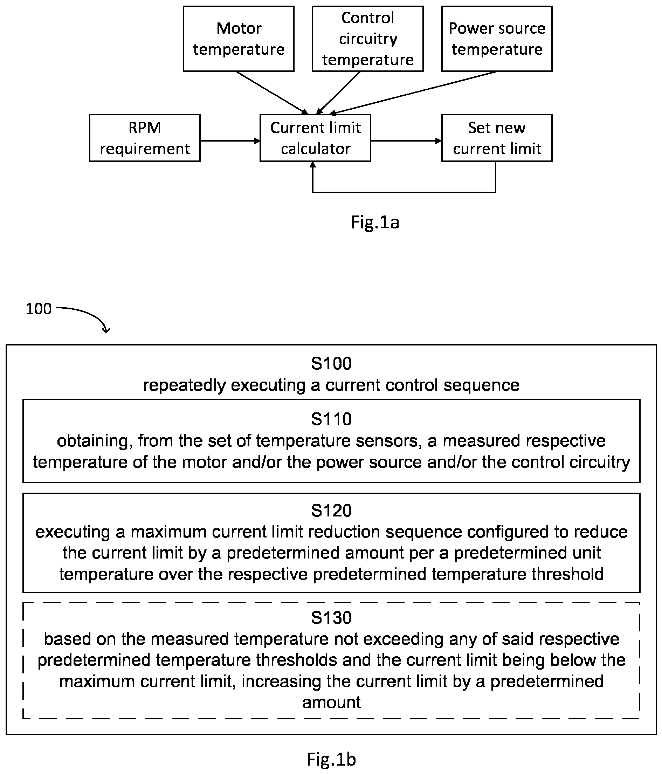

Figures 1a-e illustrate the disclosed method for dynamic current control from different perspectives and will be described in tandem below.

Figure 1a illustrates the basic idea of the disclosed method 100 for dynamic current control. During operational use, it is desirable to have the motor of the hand-held power tool operate with maximum efficiency. As the load on a motor increases, the demand for current increases. When the current reaches its limit, further increases in load result in a motor speed reduction. Since the efficiency of a motor depends on its speed, any reduction in efficiency causes a rise in temperature of the motor. But operational use also causes temperature increases in control circuitry, such as MOSFETs, and the power source, such as a battery. The main idea is thus to monitor the temperatures of the motor, control circuitry and power source, respectively, and adjust the current limit such that the motor speed, typically measured in revolutions per minute, RPM, can operate at maximum efficiency. If a temperature exceeds a predetermined threshold, the current limit is reduced to allow the component to cool overtime, and optionally, if the current limit has been reached, but the measured temperatures have not reached their predetermined thresholds, the current limit may be increased. In other words, dynamic current control is the automated process of controlling the current limit in a hand-held power tool based on temperature feedback.

Figure 1b illustrates aspects of the disclosed method 100 for dynamic current control in a hand-held power tool. The hand-held power tool comprises a motor, a power source, control circuitry and a set of temperature sensors. The set of sensors is configured to measure respective temperatures of the motor and/or the power source and/or the control circuitry. The control circuitry is arranged to control supply of a current from the power source to the motor. The amount of current supplied by the power source is configured to not exceed a current limit determined by the control circuitry. The current limit is configured to not exceed a maximum current limit.

The method 100 comprises repeatedly executing S100 a current limit control sequence. By being executed repeatedly, the current limit control sequence is executed followed by a waiting a predetermined duration, after which the current control sequence is executed again. The current control sequence comprises obtaining S110, from the set of temperature sensors, a measured respective temperature of the motor and/or the power source and/or the control circuitry. According to some preferred aspects, respective temperatures are obtained from each of the motor, the power source and the control circuitry.

The method further comprises, when the respective measured temperature exceeds a respective predetermined temperature threshold of the motor and/or the power source and/or the control circuitry, executing S120 a maximum current limit reduction sequence. The temperature thresholds are usually chosen with respect to both optimal working temperatures as well as maximum temperatures. Thus, according to some aspects, the predetermined temperature threshold of the motor is selected from a range between one hundred and two hundred degrees Celsius. According to some aspects, the predetermined threshold of the control circuitry is selected from a range between eighty and one hundred and twenty degrees Celsius. According to some aspects, the predetermined threshold of the power source is selected from a range between sixty to one hundred degrees Celsius. According to some aspects, the respective predetermined temperature threshold for the motor, control circuitry and power source are one-hundred and thirty degrees Celsius, one-hundred degrees Celsius and eighty degrees Celsius, respectively. By monitoring temperatures of the power source, such as a battery, control circuitry, MOSFETs, and the motor, a wide range of overtemperature shut down scenarios can be avoided, and component lifetimes can be extended.

The maximum current limit reduction sequence is configured to reduce the current limit by a predetermined amount per a predetermined unit temperature over the respective predetermined temperature threshold, until the respective temperature of the motor and/or the power source and/or the control circuitry is below the respective predetermined temperature threshold. According to some aspects, the predetermined amount per predetermined unit temperature of the maximum current limit reduction sequence is selected from a range of one to five amperes, A, per degree Celsius, °C. According to some further aspects, the predetermined amount per predetermined unit temperature of the maximum current limit reduction sequence is five amperes, A, per degree Celsius, °C.

When the motor is running fast, the airflow through the motor has a rapid cooling effect. In contrast, when the motor slows down because of a high load, the cooling is less, so it is better to keep the motor running as fast as possible during on-load activity. The maximum current limit reduction sequence eliminates the need for overtemperature cut-out. Additionally, for hand-held power tools such as chain saws, on-load cutting RPM can be maintained for a longer time.

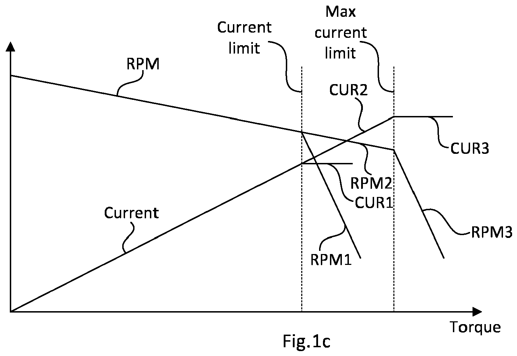

Turning to figure 1c, which illustrates current limits and their effect on the RPM for a given load. As can be seen from figure 1c, once the current limit is reached and the supplied current plateaus, CUR1, as the load (in torque) increases, the RPM drops more sharply, RPM1, than RPM2 if more current is supplied CUR2. Since higher RPM is associated with higher motor efficiency and thus lower temperature increases, as described above, it may be desirable to shift the current limit to a higher value as long as temperature thresholds and the maximum current limit are kept.

Thus, returning to figure 1c, according to some aspects, the current control sequence further comprises, based on the measured temperature not exceeding any of said respective predetermined temperature thresholds and the current limit being below the maximum current limit, increasing S130 the current limit by a predetermined amount, the increased current limit being configured to not exceed the maximum current limit.

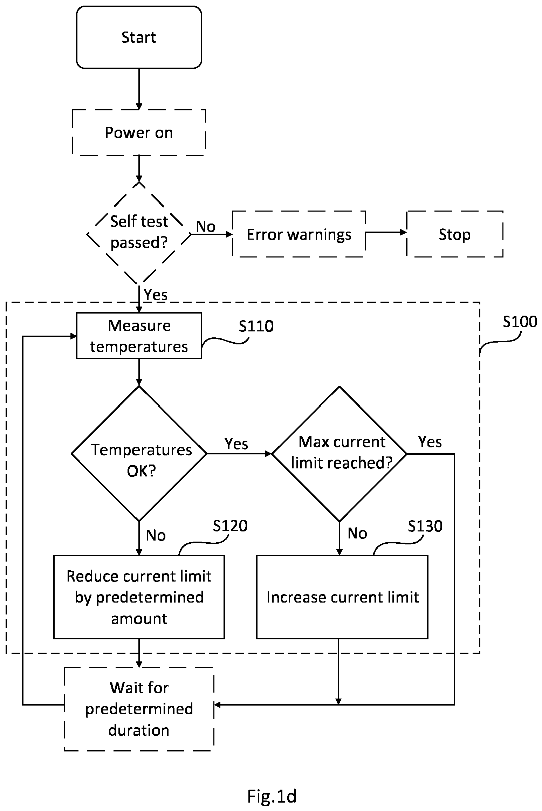

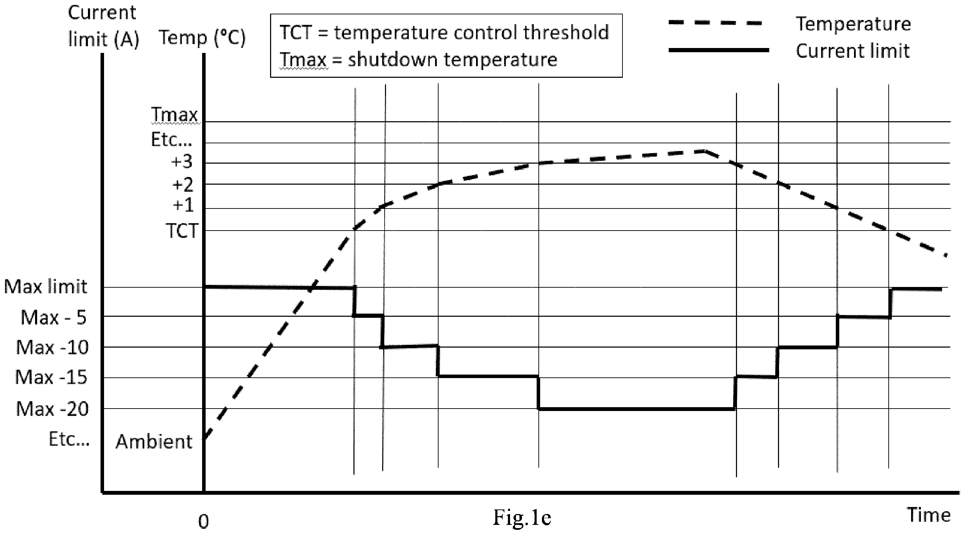

Figure 1d illustrates aspects of the disclosed method 100 in the context of a typical hand-held power tool during operational use, and figure 1e illustrates an example of an operational use scenario where technical effects and advantages of the disclosed method can be seen. For simplicity, only one temperature profile is illustrated in figure 1e, but it is to be understood that in the example of figure 1d, there are at least three temperature profiles being monitored simultaneously, as will be described further below.

The hand-held power tool comprises a motor, a power source, control circuitry and a set of temperature sensors configured to measure respective temperatures of the motor and the power source and the control circuitry. The control circuitry is arranged to control supply of a current from the power source to the motor, the amount of current supplied by the power source being configured to not exceed a current limit determined by the control circuitry. The current limit is configured to not exceed a maximum current limit.

During operational use, the hand-held power tool is initially powered on and the hand-held power tool performs a self-test to make sure that there is nothing wrong with the hand-held power tool. If self-test indicates that there is something wrong with the power tool, error warnings configured to indicate the nature of the problems are issued and the power tool is not allowed to start any motors.

Upon passing the self-test, the power tool may be used and the method 100 for dynamic current control in a hand-held power tool begins to execute. In particular, a current control sequence is repeatedly executed S100, with a frequency determined by a predetermined wait duration after each execution of the current control sequence. The current control sequence comprises obtaining S110, from the set of temperature sensors, a measured respective temperature of the motor and the power source and the control circuitry.

When the respective measured temperature exceeds a respective predetermined temperature threshold of the motor and/or the power source and/or the control circuitry, the current control sequence comprises executing S120 a maximum current limit reduction sequence. The maximum current limit reduction sequence is configured to reduce the current limit by a predetermined amount per a predetermined unit temperature over the respective predetermined temperature threshold, until the respective temperature of the motor and/or the power source and/or the control circuitry is below the respective predetermined temperature threshold. According to some aspects, the predetermined amount per predetermined unit temperature of the maximum current limit reduction sequence is five amperes, A, per degree Celsius, °C.

As described above, the motor operates more efficiently at higher RPM. Thus, if the measured temperatures have not reached their respective threshold, increasing the current limit allows the motor to operate at higher RPM, which in turn potentially reduces the rate at which temperature increases. Thus, the current control sequence further comprises, based on the measured temperature not exceeding any of said respective predetermined temperature thresholds and the current limit being below the maximum current limit, increasing S130 the current limit by a predetermined amount. The increased current limit is configured to not exceed the maximum current limit. According to some aspects, the respective predetermined temperature threshold for the motor, control circuitry and power source are one-hundred and thirty degrees Celsius, one-hundred degrees Celsius and eighty degrees Celsius, respectively.

Figure 1e illustrates an example of an operational use scenario of the method of figure 1d. Before any load is applied to the motor, the current ramps up to its maximum offload value, with the temperature gradually rising to eventually reach a steady state. As the motor is subject to a load, e.g. when a chain saw starts cutting, the current is increased rapidly to meet the need for increased output power. When the load increases to the point where the maximum current limit is reached, further increases in load causes a reduction in RPM. When the load causes the temperature to rise to one of the temperature limits, then the current control sequence lowers the current limit in predetermined steps, here illustrated as five ampere steps. The time interval with which the current control sequence is executed may be different from the sampling rates of the temperature sensors. For instance, the temperature sensors may sample the temperature at millisecond intervals, but the current control sequence is executed on a second scale, e.g. once every second. As the temperature gradually decreases, the current limit step-up. When the temperature decreases below the temperature control threshold, the current limit increases to the maximum current limit threshold.

The present disclosure further relates to a computer program product for dynamic current control comprising a non-transitory computer-readable storage medium having thereon a computer program comprising program instructions. The computer program is loadable into a processor and configured to cause the processor to perform the method for dynamic current control as described above and below. The computer program product implements the method for dynamic current control and has all the associated technical effects and advantages. According to some aspects, the processor comprises an electronic microcontroller capable of executing a user created program.

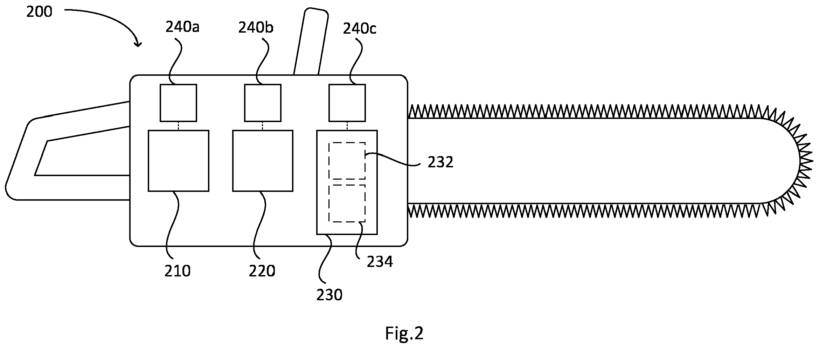

Figure 2 illustrates aspects of a hand-held power tool 200 for dynamic current control. The hand-held power tool comprises a motor 210, a power source 220, control circuitry 230, and a set of temperature sensors 240a-c configured to measure respective temperatures of the motor 210 and/or the power source 220 and/or the control circuitry 230. The control circuitry 230 is arranged to control the supply of a current from the power source 220 to the motor 210. The amount of current supplied by the power source is configured to not exceed a current limit determined by the control circuitry 230. The current limit is configured to not exceed a maximum current limit. The control circuitry 230 is configured to carry out the method for dynamic current control as described above and below. According to some aspects, the circuitry 230 comprises a processor 232 and a memory 234. The memory 234 has stored thereon a computer program product for dynamic current control as described above and below. The hand-held power tool implements the method for dynamic current control and has all the associated technical effects and advantages. According to some aspects, the processor comprises an electronic microcontroller capable of executing a user created program.

## Claims

1. A method (100) for dynamic current control in a hand-held power tool, the hand-held power tool comprising a motor, a power source, control circuitry and a set of temperature sensors configured to measure respective temperatures of the motor and/or the power source and/or the control circuitry, wherein the control circuitry is arranged to control supply of a current from the power source to the motor, the amount of current supplied by the power source being configured to not exceed a current limit determined by the control circuitry, the current limit being configured to not exceed a maximum current limit, said method comprising
- repeatedly executing (S100) a current limit control sequence, the current limit control sequence comprising
• obtaining (S110), from at least one of the set of temperature sensors, a measured respective temperature of the motor and/or the power source and/or the control circuitry,
• executing (S120) a maximum current limit reduction sequence, the maximum current limit reduction sequence being configured to reduce the current limit by a predetermined amount per a predetermined unit temperature over the respective predetermined temperature threshold, until the respective temperature of the motor and/or the power source and/or the control circuitry is below the respective predetermined temperature threshold, when the respective measured temperature exceeds a respective predetermined temperature threshold of the motor and/or the power source and/or the control circuitry.

2. The method according to claim 1, wherein the predetermined amount per predetermined unit temperature of the maximum current limit reduction sequence is five amperes, A, per degree Celsius, °C.

3. The method according to claim 1 or 2, wherein the current control sequence further comprises
• based on the measured temperature not exceeding any of said respective predetermined temperature thresholds and the current limit being below the maximum current limit, increasing (S130) the current limit by a predetermined amount, the increased current limit being configured to not exceed the maximum current limit.

4. The method according to any of the preceding claims, wherein the respective predetermined temperature threshold for the motor, control circuitry and power source are one-hundred and thirty degrees Celsius, one-hundred degrees Celsius and eighty degrees Celsius, respectively.

5. A computer program product for dynamic current control comprising a non-transitory computer-readable storage medium having thereon a computer program comprising program instructions, the computer program being loadable into a processor and configured to cause the processor to perform the method for dynamic current control according to any of the preceding claims.

6. A hand-held power tool for dynamic current control, the hand-held power tool comprising
- a motor,
- a power source,
- control circuitry, and
- a set of temperature sensors configured to measure respective temperatures of the motor and/or the power source and/or the control circuitry,
wherein the control circuitry is arranged to control the supply of a current from the power source to the motor, the amount of current supplied by the power source being configured to not exceed a current limit determined by the control circuitry, the current limit being configured to not exceed a maximum current limit, wherein the control circuitry is configured to carry out the method for dynamic current control according to any of claims 1-4.

7. The hand-held power tool according to claim 6, wherein the circuitry comprises a processor and a memory, wherein the memory has stored thereon a computer program product for dynamic current control according to claim 5.
